# EUROPEAN PATENT SPECIFICATION

(11) **EP 4 316 948 B1**
(45) Date of publication and mention of the grant of the patent: **04.11.2026**
(21) Application number: 22778299.2
(22) Date of filing: 12.01.2022
(51) Int. Cl.: B62D 1/04, B62D 1/06, B60Q 3/283, B60Q 3/64

(54) **STEERING WHEEL**
LENKRAD
VOLANT

(30) Priority: 31.03.2021 CN 202110352053
(43) Date of publication of application: 07.02.2024
(73) Proprietor: Autoliv Development AB, 447 83 Vårgårda (SE)
(72) Inventor: XU, Linlin, Shanghai 201807 (CN); DING, Liang, Shanghai 201807 (CN); LU, Xiaoshan, Shanghai 201807 (CN)
(74) Representative: Novagraaf International SA
(86) International application number: PCT/CN2022/071546
(87) International publication number: WO 2022/206110

(56) References cited:
- EP-A1- 2 644 430
- CN-A- 103 764 482
- CN-A- 104 334 407
- CN-A- 106 536 280
- CN-U- 201 980 283
- CN-U- 211 280 816
- DE-A1- 102018 200 591
- FR-A1- 3 028 476
- US-A1- 2016 311 366

## Description

### TECHNICAL FIELD

The present invention relates to automobile parts, in particular to a steering wheel.

### BACKGROUND

Steering wheels of some automobiles can emit light. Steering wheel rims of these steering wheels are illuminated when light-emitting members emit light, so that light is emitted at the wheel rims of the steering wheels. The steering wheel is provided with the light-emitting steering wheel rim, so that in one aspect, a decorative effect is achieved, and the steering wheel is more aesthetically pleasing. In another aspect, in the case that lighting is poor (e.g., at night), the light-emitting steering wheel rim can provide an illumination function. However, because the steering wheel rim is provided with a light-emitting assembly for emitting light, the steering wheel becomes bulky and heavy. Correspondingly, this results in higher requirements on the mechanical strength of the frame of the steering wheel, thereby increasing design difficulty of the steering wheel. Document US20160311366A1 relates to a steering wheel with a light attached to a PCB.

### SUMMARY

The objective of the present invention is to provide a relatively small and lightweight steering wheel. Further, the objective of the present invention is also to provide a steering wheel of which a light-emitting assembly does not result in an increase in design difficulty.

Provided in the present invention is a steering wheel, comprising a steering wheel rim and a light-emitting assembly, the steering wheel rim having an inner cavity, and the light-emitting assembly being provided in the inner cavity so as to be used to cause the steering wheel rim to emit light,
wherein,
the light-emitting assembly comprises a light source, a first printed circuit board, and a second printed circuit board, wherein the light source is provided on the first printed circuit board, the second printed circuit board being provided with a control assembly for controlling the light source, the second printed circuit board being configured to control the light source by means of an electrical connection with the first printed circuit board,
the first printed circuit board being configured to be a flexible circuit board, and the second printed circuit board being configured to be a rigid circuit board.

According to the present invention, the light-emitting assembly further comprises a light guide member, and the steering wheel rim comprises a housing, the light guide member being provided on a first side surface of the housing, and the first printed circuit board and the second printed circuit board being provided on a second side surface of the housing opposite the first side surface.

According to the present invention, the housing is provided with a recess for accommodating the light guide member, and the recess is provided with a protruding portion for securing the light guide member.

According to the present invention, the light guide member is configured to be a light guide tube, and the protruding portion comprises a first protruding portion, a second protruding portion, a third protruding portion, and a fourth protruding portion,
the first protruding portion, the second protruding portion, and the third protruding portion being provided at each hook-shaped end portion of the light guide member, the first protruding portion and the second protruding portion at each hook-shaped end portion being opposite each other in a radial direction of the steering wheel rim and abutting the light guide member, the third protruding portion abutting an end side of the light guide member so as to prevent the light guide member from rotating relative to the housing, and
the fourth protruding portion being configured to abut an upper side of the light guide member so as to hold the light guide member to the housing.

According to an embodiment of the present invention, one of the light guide member and the recess is provided with a position-limiting protruding portion, and the other is provided with a position-limiting recess, the position-limiting protruding portion and the position-limiting recess cooperating to limit the position of the light guide member relative to the housing.

According to an embodiment of the present invention, another side of the first printed circuit board opposite a side where the light source is located is provided with a reinforcement portion, and at least a portion of the reinforcement portion corresponds to the light source in a thickness direction of the first printed circuit board.

According to an embodiment of the present invention, the first printed circuit board is secured to the housing by means of a securing member and at the reinforcement portion.

According to an embodiment of the present invention, the housing is provided with a slide slot, and the second printed circuit board is configured to slide in the slide slot relative to the housing so as to be secured to the housing.

According to an embodiment of the present invention, one end of the first printed circuit board is inserted into an interface provided on the second printed circuit board so as to achieve the electrical connection between the first printed circuit board and the second printed circuit board.

According to an embodiment of the present invention, the steering wheel rim further comprises a cap secured on the housing, and light emitted by the light source passes through a hole of the housing and the light guide member, and is then emitted from the cap so as to cause the steering wheel rim to emit light.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, where
FIG. 1 schematically illustrates a steering wheel according to an embodiment of the present invention.
FIG. 2 schematically illustrates a light-emitting assembly in a steering wheel according to an embodiment of the present invention.
FIG. 3 schematically illustrates a partial view of a light-emitting assembly in a steering wheel according to an embodiment of the present invention.
FIG. 4(a) is an enlarged view of a portion A in FIG. 3, and FIG. 4(b) and FIG. 4(c) are cross-sectional views acquired along lines E-E and I-I in FIG. 4(a), respectively.
FIG. 5(a) is an enlarged view of a portion B in FIG. 3, and FIG. 5(b) is a cross-sectional view acquired along a line F-F in FIG. 5(a).
FIG. 6(a) is an enlarged view of a portion C in FIG. 3, and FIG. 6(b) and FIG. 6(c) are cross-sectional views acquired along lines H-H and G-G in FIG. 4(a), respectively.
FIG. 7(a) schematically illustrates a partial view of a light-emitting assembly in a steering wheel according to an embodiment of the present invention. FIG. 7(b) is an enlarged view of a portion J in FIG. 7(a).
FIG. 8 schematically illustrates some components in a light-emitting assembly in a steering wheel according to an embodiment of the present invention.
FIG. 9(a), FIG. 9(b), and FIG. 9(c) respectively schematically illustrate partial views of light-emitting assemblies in steering wheels according to different embodiments of the present invention.

### DETAILED DESCRIPTION

Specific implementations of a steering wheel according to the present invention will be described below with reference to the accompanying drawings. The following detailed description and the accompanying drawings are used to illustratively explain the principles of the present invention. The present invention is not limited to the described preferred embodiments, and various embodiments described in the present invention can be used individually or in any claimed combination. The protection scope of the present invention is defined by claims.

In addition, terms for spatial relations (such as "upper", "lower", "left", "right", etc.) are used to describe a relative positional relationship between an element and another element shown in the accompanying drawings. Therefore, when used, the terms for spatial relations may be applied to directions different from those shown in the accompanying drawings. Obviously, although all of these terms for spatial relations refer to the directions shown in the accompanying drawings for ease of explanation, a person skilled in the art will appreciate that directions different from those shown in the drawings may be used.

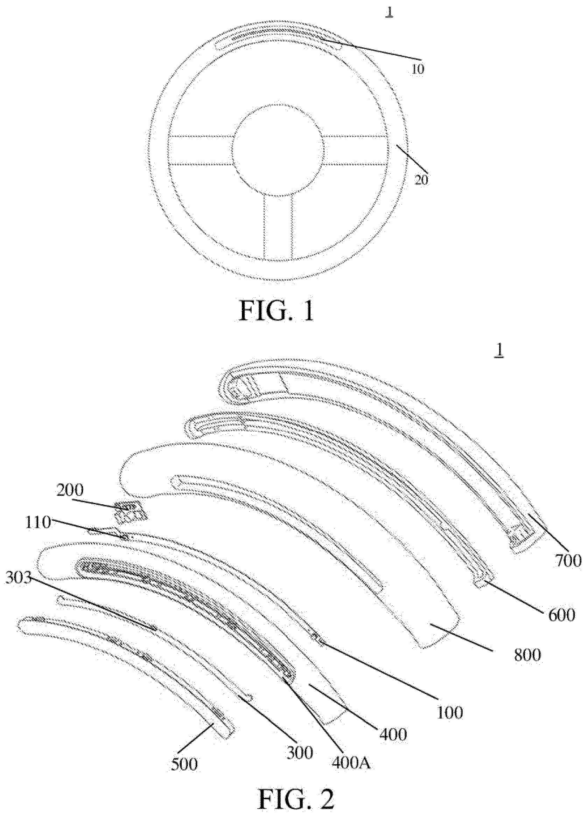

FIG. 1 schematically illustrates a steering wheel according to an embodiment of the present invention. The steering wheel according to the embodiment of the present invention is described below with reference to FIG. 1.

As shown in FIG. 1, provided in the present invention is a steering wheel 1. The steering wheel 1 includes a steering wheel rim 20 and a light-emitting assembly 10, and the light-emitting assembly 10 is provided at the steering wheel rim 20. Specifically, the steering wheel rim 20 has an inner cavity, and the light-emitting assembly 10 is provided in the inner cavity of the steering wheel rim 20 so as to be used to cause the steering wheel rim 20 to emit light. As an example, the light-emitting assembly 10 is provided in the inner cavity of the steering wheel rim 20, and the entire outer surface of the steering wheel rim 20 is smooth. Especially, a portion of the steering wheel rim 20 where the light-emitting assembly 10 is provided is flush with the remaining portion of the steering wheel rim 20, so that the steering wheel rim 20 has a consistent and complete appearance. In addition, it should be noted that although it can be clearly seen from FIG. 1 that the light-emitting assembly 10 of this embodiment is configured to be in the shape of a circular arc, and correspondingly, the light-emitting assembly 10 has a circular arc capable of emitting light, the steering wheel of the present invention is not limited thereto, and the light-emitting assembly may also be configured to be in other shapes, such as semi-circular, circular, and even other irregular shapes.

FIG. 2 schematically illustrates a light-emitting assembly in a steering wheel according to an embodiment of the present invention. The light-emitting assembly in the steering wheel according to the embodiment of the present invention is described below with reference to FIG. 2.

As shown in FIG. 2, the steering wheel 1 according to the embodiment of the present invention is illustrated by means of an exploded view so as to more clearly illustrate the structure of the steering wheel 1. As shown in FIG. 2, in the steering wheel 1 according to the present invention, the light-emitting assembly 10 includes a light source 110, a first printed circuit board 100, and a second printed circuit board 200. The foregoing components of the light-emitting assembly 10 are described in detail below.

As shown in FIG. 2, the light source 110 is provided on the first printed circuit board 100. In this embodiment, left and right ends of the first printed circuit board 100 are each provided with one light source 110 (e.g., an LED). The second printed circuit board 200 is provided with a control assembly for controlling the light source 110, so as to, for example, control actions such as turning on and turning off the light source 110. To this end, one end of the first printed circuit board 100 (an end portion of the first printed circuit board 100 located on a left side of the left light source 110 in FIG. 2) is inserted into an interface provided on the second printed circuit board 200 so as to achieve an electrical connection between the first printed circuit board 100 and the second printed circuit board 200, whereby the second printed circuit board 200 is configured to control the light source 110 by means of the electrical connection with the first printed circuit board 100. In addition, the first printed circuit board 100 is configured to be a flexible circuit board, and the second printed circuit board 200 is configured to be a rigid circuit board.

In the light-emitting assembly of the steering wheel of the present invention, the light source is provided on the flexible circuit board, and the control assembly for controlling the light source is provided on the rigid printed circuit board, so that the size of the rigid circuit board can be configured to be as small as possible, and the flexible circuit board is used to meet requirements on distribution, mounting, etc., of the light source of the light-emitting assembly, thereby enabling the steering wheel of the present invention to emit light, ensuring that the light-emitting assembly and correspondingly the steering wheel are relatively small and lightweight, and ensuring that the light-emitting assembly does not result in an increase in design difficulty.

The steering wheel 10 according to the embodiment of the present invention is further described below with reference to FIG. 2.

As shown in FIG. 2, the light-emitting assembly 10 according to the present invention further includes a light guide member 300, and the steering wheel rim 20 includes a housing 400.

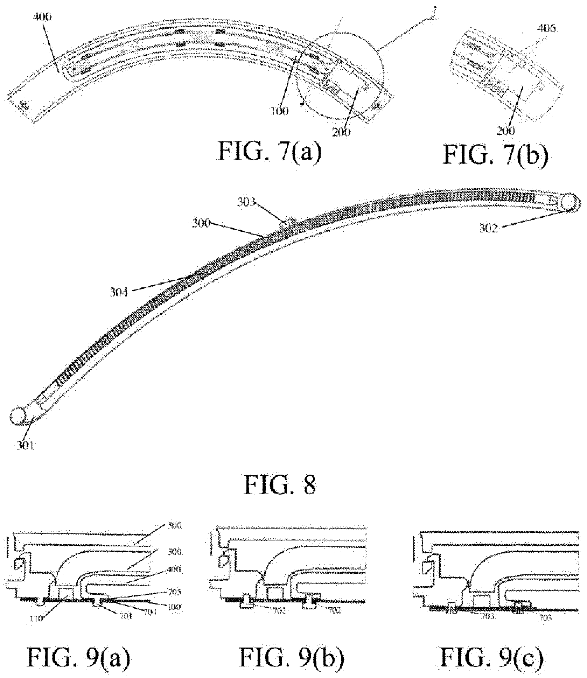

According to the invention, as shown in FIG. 8, the light guide member 300 is configured to be tubular, and may have a first end 301 and a second end 302 that are bent. Further, in order to achieve uniform light emission, a portion of an outer peripheral surface of the light guide member 300 is machined into a flat surface, and the flat surface is provided with a plurality of optical teeth 304. The plurality of optical teeth 304 are arranged in a lengthwise direction of the light guide member 300. As another example, the light guide member 300 may also be a light guide fiber.

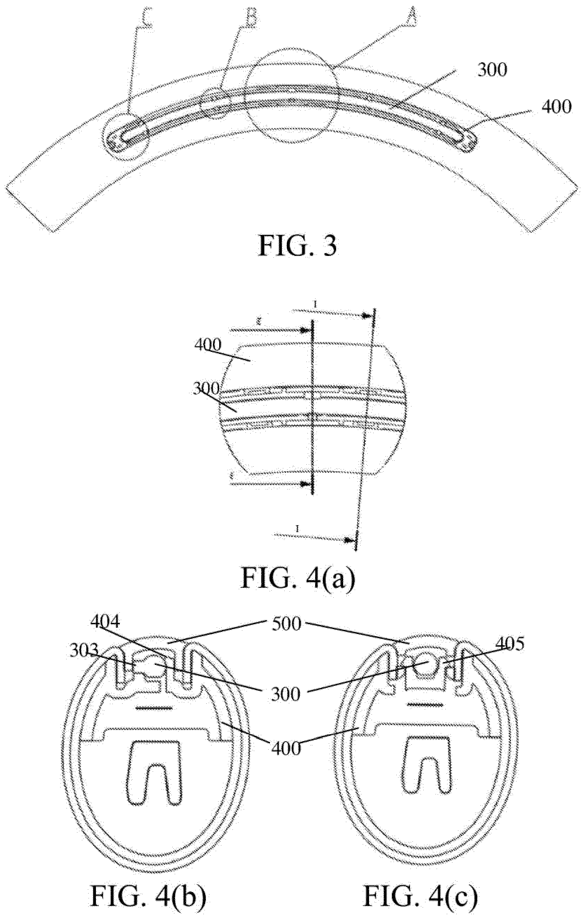

As an example, as shown in FIG. 4(b) or 4(c), the housing 400 is substantially in the shape of a half arc. In addition, two ends of the housing 400 are secured (e.g., bonded) to a foam body 700. The light guide member 300 is provided on a first side surface of the housing 400, and the first printed circuit board 100 and the second printed circuit board 200 are provided on a second side surface of the housing 400 opposite the first side surface. Specifically, in FIG. 2, the first side surface of the housing 400 corresponds to a lower side surface thereof (shown in FIG. 2), and the second side surface of the housing 400 corresponds to an upper side surface thereof (not shown in FIG. 2).

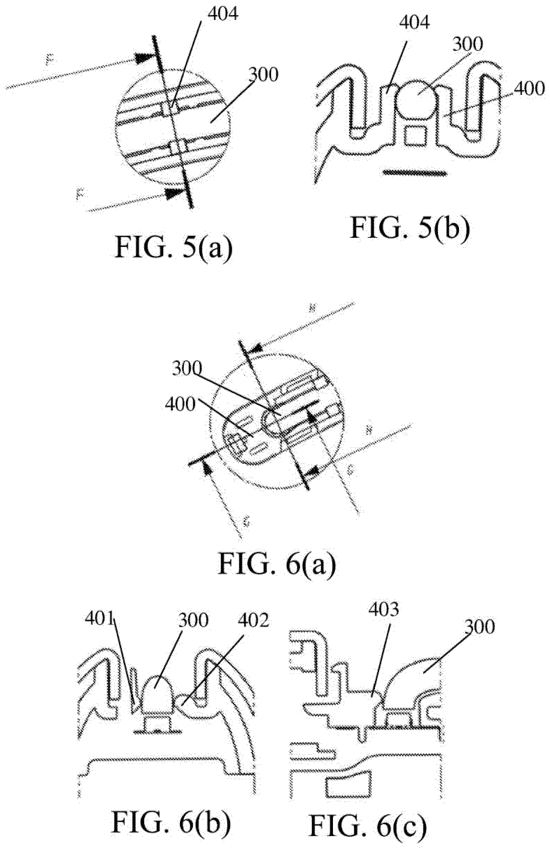

In addition, as shown in FIG. 2, the steering wheel 1 further includes a cap 500, a rigid body 600, the foam body 700, and a sheath 800. The rigid body 600 is provided in the foam body 700 so as to provide rigid support for the entire steering wheel rim 20. As mentioned above, the foam body 700 is used to secure the housing 400, and can also contribute, at least partially, to the formation of the shape of the steering wheel rim. The sheath 800 defines an outer peripheral surface of the steering wheel rim 20 together with the cap 500, and the sheath 800 is secured to the housing 400 (e.g., a portion of the sheath is inserted into a slit provided on the housing 400, as shown in FIG. 4(b) and FIG. 4(c)). In addition, the cap 500 is configured to be a transparent member, and is secured to the housing 400. Light emitted by the light source 110 passes through a hole of the housing 400 (as shown in FIG. 6(a) or FIG. 6(b)) and the light guide member 300, and is then emitted from the cap 500 so as to cause the steering wheel rim to emit light.

In order to accommodate the light guide member 300 and the cap 500, the first side surface of the housing 400 is provided with a recess 400A. This is described in further detail below.

FIG. 3 schematically illustrates a partial view of a light-emitting assembly in a steering wheel according to an embodiment of the present invention. FIG. 4(a) is an enlarged view of a portion A in FIG. 3, and FIG. 4(b) and FIG. 4(c) are cross-sectional views acquired along lines E-E and I-I in FIG. 4(a), respectively. FIG. 5(a) is an enlarged view of a portion B in FIG. 3, and FIG. 5(b) is a cross-sectional view acquired along a line F-F in FIG. 5(a). FIG. 6(a) is an enlarged view of a portion C in FIG. 3, and FIG. 6(b) and FIG. 6(c) are cross-sectional views acquired along lines H-H and G-G in FIG. 4(a), respectively. The steering wheel according to the embodiment of the present invention is further described below with reference to these accompanying drawings.

As shown in FIG. 3, in order to accommodate the light guide member 300 and the cap 500, the recess 400A provided on the first side surface of the housing 400 is provided with structures for respectively securing the light guide member 300 and the cap 500.

Specifically, with reference to FIG. 4(c), the housing 400 is provided with a fifth protruding portion 405 at the recess 400A. The fifth protruding portion 405 is inserted into a hole of the cap 500, so that the cap 500 is secured to the housing 400. As an example, the fifth protruding portions 405 are arranged in pairs and distributed evenly along the recess 400A.

With reference to FIG. 4(b) and FIG. 5(b), the housing 400 is provided with a fourth protruding portion 404 at the recess 400A, and the fourth protruding portion 404 is configured to abut an upper side of the light guide member 300 so as to hold the light guide member 300 to the housing 400.

With reference to FIG. 6(b) and FIG. 6(c), the housing 400 is provided with a first protruding portion 401, a second protruding portion 402, and a third protruding portion 403 at the recess 400A, and the first protruding portion 401, the second protruding portion 402, and the third protruding portion 403 are provided at each of hook-shaped end portions 301 and 302 of the light guide member 300. As shown in FIG. 6(b), the first protruding portion 401 and the second protruding portion 402 at each hook-shaped end portion are opposite each other in a radial direction of the steering wheel rim 20 and abut the light guide member 300 so as to prevent the light guide member 300 from rotating about an axial direction thereof. In addition, as shown in FIG. 6(c), the third protruding portion 403 abuts an end side of the light guide member 300 so as to prevent the end portion of the light guide member 300 from bending upward relative to the housing 400. Therefore, the first protruding portion 401, the second protruding portion 402, and the third protruding portion 403 advantageously prevent the light guide member 300 from rotating relative to the housing 400. As an example, each of the first protruding portion 401, the second protruding portion 402, and the third protruding portion 403 is configured to be at a distance from the housing 400, and the distance is, for example, 0.1-0.2 millimeters, so that the light guide member 300 is smoothly mounted on the housing 400.

With reference to FIG. 4(b), the light guide member 300 is provided with a position-limiting protruding portion 303 (the position-limiting protruding portion 303 is more clearly shown in FIG. 8). Correspondingly, the recess is provided with a position-limiting recess (not shown), and the position-limiting protruding portion 303 and the position-limiting recess cooperate to limit the position of the light guide member 300 relative to the housing 400 so as to quickly position the light guide member 300 in the housing 300 during mounting. It can be understood that this is merely an example, and the steering wheel of the present invention is not limited thereto. For example, the position-limiting protruding portion may be provided on the housing, and correspondingly the position-limiting recess is provided on the light guide member.

FIG. 7(a) schematically illustrates a partial view of a light-emitting assembly in a steering wheel according to an embodiment of the present invention. FIG. 7(b) is an enlarged view of a portion J in FIG. 7(a).

As shown in FIG. 7(b), the housing 400 is provided with a slide slot 406, and the second printed circuit board 200 is configured to slide in the slide slot 406 relative to the housing 400 so as to be secured to the housing 400. Specifically, in the arrangement shown in FIG. 7(b), the second printed circuit board 300 slides from the right to the left in the slide slot 406. The thickness of the slide slot 406 decreases gradually from the right to the left, so that when the second printed circuit board 300 sliding leftwards in the slide slot 406 reaches a position where the thickness of the slide slot 406 is slightly less than the thickness of the second printed circuit board, the second printed circuit board is held tightly in the slide slot 406.

It should be noted that the above embodiments are merely examples, and the steering wheel of the present invention is not limited thereto. For example, the second printed circuit board may also be directly welded to the housing, or secured to the housing by means of securing members such as a screw, etc. In addition, the tubular light guide member may also be prevented from rotating relative to the housing in another manner.

FIG. 9(a), FIG. 9(b), and FIG. 9(c) respectively schematically illustrate partial views of light-emitting assemblies in steering wheels according to different embodiments of the present invention. The light-emitting assemblies according to the embodiments of the present invention are further described below with reference to FIG. 9(a), FIG. 9(b), and FIG. 9(c).

As shown in FIG. 9(a), the first printed circuit board 100 is welded to the housing 400. Specifically, the first printed circuit board 100 is secured to the housing 400 by a weld leg 701. An upper side of the first printed circuit board 100 is provided with the light source 110, and another side (i.e., a lower side) opposite the side where the light source 100 is located is provided with a reinforcement portion 704, and at least a portion of the reinforcement portion 704 corresponds to the light source 100 in a thickness direction of the first printed circuit board 100 so as to provide rigid support for the light source 100. In addition, a side surface of the first printed circuit board 100 where the light source 100 is provided is further provided with a glue 705. The glue 705 is represented by a dotted portion in FIG. 7(a). The glue 705 is used to bond the first printed circuit board 100 to the housing 400 so that the first printed circuit board 100 and the housing 400 are more firmly secured to each other. It can be understood that the first printed circuit board 100 is not necessarily secured to the housing 400 by means of welding, and may also be secured to the housing in other manners, for example, by means of a screw (as shown in FIG. 9(b)), a fastener (as shown in FIG. 9(c)), etc.

As described above, although the exemplary embodiments of the present invention have been described with reference to the accompanying drawings in the description, the present invention is not limited to the aforementioned specific embodiments, and the scope of protection of the present invention is defined by the claims.

## Claims

1. A steering wheel (1), comprising a steering wheel rim (20) and a light-emitting assembly (10), the steering wheel rim (20) having an inner cavity, and the light-emitting assembly (10) being provided in the inner cavity so as to be used to cause the steering wheel rim (20) to emit light,
wherein:
the light-emitting assembly (10) comprises a light source (110), a first printed circuit board (100), and a second printed circuit board (200), wherein the light source (110) is provided on the first printed circuit board (100), the second printed circuit board (200) being provided with a control assembly for controlling the light source (110), the second printed circuit board (200) being configured to control the light source (110) by means of an electrical connection with the first printed circuit board (100); and
the first printed circuit board (100) being configured to be a flexible circuit board, and the second printed circuit board (200) being configured to be a rigid circuit board,
wherein the light-emitting assembly (10) further comprises a light guide member (300), the steering wheel rim (20) comprising a housing (400), the light guide member (300) being provided on a first side surface of the housing (400), and the first printed circuit board (100) and the second printed circuit board (200) being provided on a second side surface of the housing (400) opposite the first side surface,
wherein the housing (400) is provided with a recess (400A) for accommodating the light guide member (300), and the recess (400A) is provided with a protruding portion for securing the light guide member (300),
and wherein the light guide member (300) is configured to be a light guide tube, and the protruding portion comprises a first protruding portion (401), a second protruding portion (402), a third protruding portion (403), and a fourth protruding portion (404);
the first protruding portion (401), the second protruding portion (402), and the third protruding portion (403) being provided at each hook-shaped end portion of the light guide member (300), the first protruding portion (401) and the second protruding portion (402) at each hook-shaped end portion being opposite each other in a radial direction of the steering wheel rim (20) and abutting the light guide member (300), the third protruding portion (403) abutting an end side of the light guide member (300) so as to prevent the light guide member (300) from rotating relative to the housing (400); and
the fourth protruding portion (404) being configured to abut an upper side of the light guide member (300) so as to hold the light guide member (300) to the housing (400).

2. The steering wheel (1) according to claim 1, wherein one of the light guide member (300) and the recess (400A) is provided with a position-limiting protruding portion (303), and the other is provided with a position-limiting recess, the position-limiting protruding portion (303) and the position-limiting recess cooperating to limit the position of the light guide member (300) relative to the housing (400).

3. The steering wheel (1) according to claim 1, wherein another side of the first printed circuit board (100) opposite a side where the light source (110) is located is provided with a reinforcement portion (704), and at least a portion of the reinforcement portion (704) corresponds to the light source (110) in a thickness direction of the first printed circuit board (100).

4. The steering wheel (1) according to claim 1, wherein another side of the first printed circuit board (100) opposite a side where the light source (110) is located is provided with a reinforcement portion (704), and at least a portion of the reinforcement portion (704) corresponds to the light source (110) in a thickness direction of the first printed circuit board (100),
and wherein the first printed circuit board (100) is secured to the housing (400) by means of a securing member and at the reinforcement portion (704).

5. The steering wheel (1) according to claim 1, wherein the housing (400) is provided with a slide slot (406), and the second printed circuit board (200) is configured to slide in the slide slot (406) relative to the housing (400) so as to be secured to the housing (400).

6. The steering wheel (1) according to claim 5, wherein one end of the first printed circuit board (100) is inserted into an interface provided on the second printed circuit board (200) so as to achieve the electrical connection between the first printed circuit board (100) and the second printed circuit board (200).

7. The steering wheel (1) according to claim 1, wherein the steering wheel rim (20) further comprises a cap (500) secured on the housing (400), and light emitted by the light source (110) passes through a hole of the housing (400) and the light guide member (300), and is then emitted from the cap (500) so as to cause the steering wheel rim (20) to emit light.

## Patentansprüche

1. Lenkrad (1), umfassend einen Lenkradkranz (20) und eine lichtemittierende Anordnung (10), wobei der Lenkradkranz (20) einen inneren Hohlraum aufweist und die lichtemittierende Anordnung (10) in dem inneren Hohlraum bereitgestellt ist, um dazu verwendet zu werden, zu veranlassen, dass der Lenkradkranz (20) Licht abstrahlt,
wobei:
die lichtemittierende Anordnung (10) eine Lichtquelle (110), eine erste Leiterplatte (100) und eine zweite Leiterplatte (200) umfasst, wobei die Lichtquelle (110) auf der ersten Leiterplatte (100) bereitgestellt ist, wobei die zweite Leiterplatte (200) mit einer Steueranordnung zum Steuern der Lichtquelle (110) versehen ist, wobei die zweite Leiterplatte (200) konfiguriert ist, um die Lichtquelle (110) mittels einer elektrischen Verbindung mit der ersten Leiterplatte (100) zu steuern; und
wobei die erste Leiterplatte (100) als flexible Leiterplatte konfiguriert ist und die zweite Leiterplatte (200) als starre Leiterplatte konfiguriert ist,
wobei die lichtemittierende Anordnung (10) ferner ein Lichtführungselement (300) umfasst, wobei der Lenkradkranz (20) ein Gehäuse (400) umfasst, wobei das Lichtführungselement (300) an einer ersten Seitenoberfläche des Gehäuses (400) bereitgestellt ist und die erste Leiterplatte (100) und die zweite Leiterplatte (200) an einer zweiten Seitenoberfläche des Gehäuses (400) gegenüber der ersten Seitenoberfläche bereitgestellt sind,
wobei das Gehäuse (400) mit einer Aussparung (400A) zur Aufnahme des Lichtführungselements (300) versehen ist, und die Aussparung (400A) mit einem vorstehenden Abschnitt zur Befestigung des Lichtführungselements (300) versehen ist, und wobei das Lichtführungselement (300) als ein Lichtführungsrohr konfiguriert ist, und der vorstehende Abschnitt einen ersten vorstehenden Abschnitt (401), einen zweiten vorstehenden Abschnitt (402), einen dritten vorstehenden Abschnitt (403) und einen vierten vorstehenden Abschnitt (404) umfasst;
wobei der erste vorstehende Abschnitt (401), der zweite vorstehende Abschnitt (402) und der dritte vorstehende Abschnitt (403) an jedem hakenförmigen Endabschnitt des Lichtführungselements (300) bereitgestellt sind, wobei der erste vorstehende Abschnitt (401) und der zweite vorstehende Abschnitt (402) an jedem hakenförmigen Endabschnitt einander in einer radialen Richtung des Lenkradkranzes (20) gegenüberliegen und an dem Lichtführungselement (300) anliegen, wobei der dritte vorstehende Abschnitt (403) an einer Endseite des Lichtführungselements (300) anliegt, um zu verhindern, dass sich das Lichtführungselement (300) relativ zu dem Gehäuse (400) dreht; und
wobei der vierte vorstehende Abschnitt (404) konfiguriert ist, um an einer Oberseite des Lichtführungselements (300) anzuliegen, um das Lichtführungselement (300) an dem Gehäuse (400) zu halten.

2. Lenkrad (1) nach Anspruch 1, wobei eines von dem Lichtführungselement (300) und der Aussparung (400A) mit einem positionsbegrenzenden vorstehenden Abschnitt (303) versehen ist, und das andere mit einer positionsbegrenzenden Aussparung versehen ist, wobei der positionsbegrenzende vorstehende Abschnitt (303) und die positionsbegrenzende Aussparung zusammenwirken, um die Position des Lichtführungselements (300) relativ zu dem Gehäuse (400) zu begrenzen.

3. Lenkrad (1) nach Anspruch 1, wobei eine andere Seite der ersten Leiterplatte (100) gegenüber einer Seite, auf der sich die Lichtquelle (110) befindet, mit einem Verstärkungsabschnitt (704) versehen ist, und mindestens ein Abschnitt des Verstärkungsabschnitts (704) der Lichtquelle (110) in einer Dickenrichtung der ersten Leiterplatte (100) entspricht.

4. Lenkrad (1) nach Anspruch 1, wobei eine andere Seite der ersten Leiterplatte (100) gegenüber einer Seite, auf der sich die Lichtquelle (110) befindet, mit einem Verstärkungsabschnitt (704) versehen ist, und mindestens ein Abschnitt des Verstärkungsabschnitts (704) der Lichtquelle (110) in einer Dickenrichtung der ersten Leiterplatte (100) entspricht,
und wobei die erste Leiterplatte (100) an dem Gehäuse (400) mittels eines Befestigungselements und an dem Verstärkungsabschnitt (704) befestigt ist.

5. Lenkrad (1) nach Anspruch 1, wobei das Gehäuse (400) mit einem Gleitschlitz (406) versehen ist und die zweite Leiterplatte (200) konfiguriert ist, um in dem Gleitschlitz (406) relativ zu dem Gehäuse (400) zu gleiten, um an dem Gehäuse (400) befestigt zu werden.

6. Lenkrad (1) nach Anspruch 5, wobei ein Ende der ersten Leiterplatte (100) in eine auf der zweiten Leiterplatte (200) bereitgestellte Schnittstelle eingeführt ist, um die elektrische Verbindung zwischen der ersten Leiterplatte (100) und der zweiten Leiterplatte (200) herzustellen.

7. Lenkrad (1) nach Anspruch 1, wobei der Lenkradkranz (20) ferner eine an dem Gehäuse (400) befestigte Kappe (500) umfasst, und von der Lichtquelle (110) abgestrahltes Licht durch ein Loch des Gehäuses (400) und das Lichtführungselement (300) hindurchtritt und dann von der Kappe (500) abgestrahlt wird, um zu veranlassen, dass der Lenkradkranz (20) Licht abstrahlt.

## Revendications

1. Volant de direction (1), comprenant une couronne de volant de direction (20) et un ensemble émetteur de lumière (10), la couronne de volant de direction (20) ayant une cavité interne, et l'ensemble émetteur de lumière (10) étant fourni dans la cavité interne de façon à être utilisé pour amener la couronne de volant de direction (20) à émettre de la lumière,
dans lequel :
l'ensemble émetteur de lumière (10) comprend une source de lumière (110), une première carte de circuit imprimé (100) et une seconde carte de circuit imprimé (200), dans lequel la source de lumière (110) est fournie sur la première carte de circuit imprimé (100), la seconde carte de circuit imprimé (200) étant pourvue d'un ensemble de commande permettant de commander la source de lumière (110), la seconde carte de circuit imprimé (200) étant configurée pour commander la source de lumière (110) au moyen d'une connexion électrique avec la première carte de circuit imprimé (100) ; et
la première carte de circuit imprimé (100) étant conçue pour être une carte de circuit flexible, et la seconde carte de circuit imprimé (200) étant conçue pour être une carte de circuit rigide,
dans lequel l'ensemble émetteur de lumière (10) comprend en outre un élément de guidage de lumière (300), la couronne de volant de direction (20) comprenant un logement (400), l'élément de guidage de lumière (300) étant fourni sur une première surface latérale du logement (400), et la première carte de circuit imprimé (100) et la seconde carte de circuit imprimé (200) étant fournies sur une seconde surface latérale du logement (400) opposée à la première surface latérale,
dans lequel le logement (400) est pourvu d'un évidement (400A) permettant d'accueillir l'élément de guidage de lumière (300), et l'évidement (400A) est pourvu d'une partie saillante permettant de fixer l'élément de guidage de lumière (300), et dans lequel l'élément de guidage de lumière (300) est conçu pour être un tube de guidage de lumière, et la partie saillante comprend une première partie saillante (401), une deuxième partie saillante (402), une troisième partie saillante (403) et une quatrième partie saillante (404) ;
la première partie saillante (401), la deuxième partie saillante (402) et la troisième partie saillante (403) étant fournies au niveau de chaque partie d'extrémité en forme de crochet de l'élément de guidage de lumière (300), la première partie saillante (401) et la deuxième partie saillante (402) au niveau de chaque partie d'extrémité en forme de crochet étant opposées l'une à l'autre dans une direction radiale de la couronne de volant de direction (20) et venant en butée contre l'élément de guidage de lumière (300), la troisième partie saillante (403) venant en butée contre un côté d'extrémité de l'élément de guidage de lumière (300) de façon à empêcher l'élément de guidage de lumière (300) d'effectuer une rotation par rapport au logement (400) ; et
la quatrième partie saillante (404) étant conçue pour venir en butée contre un côté supérieur de l'élément de guidage de lumière (300) de façon à maintenir l'élément de guidage de lumière (300) sur le logement (400).

2. Volant de direction (1) selon la revendication 1, dans lequel l'un de l'élément de guidage de lumière (300) et de l'évidement (400A) est pourvu d'une partie saillante de limitation de position (303), et l'autre est pourvue d'un évidement de limitation de position, la partie saillante de limitation de position (303) et l'évidement de limitation de position coopérant pour limiter la position de l'élément de guidage de lumière (300) par rapport au logement (400).

3. Volant de direction (1) selon la revendication 1, dans lequel un autre côté de la première carte de circuit imprimé (100) opposé à un côté où la source de lumière (110) est localisée est pourvu d'une partie de renfort (704), et au moins une partie de la partie de renfort (704) correspond à la source de lumière (110) dans une direction d'épaisseur de la première carte de circuit imprimé (100).

4. Volant de direction (1) selon la revendication 1, dans lequel un autre côté de la première carte de circuit imprimé (100) opposé à un côté où la source de lumière (110) est localisée est pourvu d'une partie de renfort (704), et au moins une partie de la partie de renfort (704) correspond à la source de lumière (110) dans une direction d'épaisseur de la première carte de circuit imprimé (100),
et dans lequel la première carte de circuit imprimé (100) est fixée au logement (400) au moyen d'un élément de fixation et au niveau de la partie de renfort (704).

5. Volant de direction (1) selon la revendication 1, dans lequel le logement (400) est pourvu d'une fente de coulissement (406), et la seconde carte de circuit imprimé (200) est conçue pour coulisser dans la fente de coulissement (406) par rapport au logement (400) de façon à être fixée au logement (400).

6. Volant de direction (1) selon la revendication 5, dans lequel une extrémité de la première carte de circuit imprimé (100) est insérée dans une interface fournie sur la seconde carte de circuit imprimé (200) de façon à réaliser la connexion électrique entre la première carte de circuit imprimé (100) et la seconde carte de circuit imprimé (200).

7. Volant de direction (1) selon la revendication 1, dans lequel la couronne de volant de direction (20) comprend en outre une coiffe (500) fixée sur le logement (400), et la lumière émise par la source de lumière (110) passe à travers un trou du logement (400) et l'élément de guidage de lumière (300), et est ensuite émise à partir de la coiffe (500) de façon à amener la couronne de volant de direction (20) à émettre de la lumière.
